(19) Europäisches Patentamt
European Patent Office
Office européen des brevets

(11) Veröffentlichungsnummer: 0 377 870 B1

# (12) EUROPÄISCHE PATENTSCHRIFT

(45) Veröffentlichungstag der Patentschrift: 02.10.91 Patentblatt 91/40

(51) Int. Cl.$^5$: C07F 9/32

(21) Anmeldenummer: 89123520.2

(22) Anmeldetag: 20.12.89

## (54) Methyl-3,3-dialkoxy-1-propyl-phosphinsäureester, die entsprechenden 3- Oxoverbindungen sowie ein Verfahren zu deren Herstellung.

Die Akte enthält technische Angaben, die nach dem Eingang der Anmeldung eingereicht wurden und die nicht in dieser Patentschrift enthalten sind.

(30) Priorität: 07.01.89 DE 3900331

(43) Veröffentlichungstag der Anmeldung: 18.07.90 Patentblatt 90/29

(45) Bekanntmachung des Hinweises auf die Patenterteilung: 02.10.91 Patentblatt 91/40

(84) Benannte Vertragsstaaten: AT BE CH DE FR GB IT LI NL

(56) Entgegenhaltungen:
EP-A- 0 009 022
DE-A- 2 516 343

(73) Patentinhaber: HOECHST AKTIENGESELLSCHAFT
Postfach 80 03 20
W-6230 Frankfurt am Main 80 (DE)

(72) Erfinder: Böhshar, Manfred, Dr.
Im Förstergrund 14
W-6233 Kelkheim(Taunus) (DE)
Erfinder: Kleiner, Hans-Jerg, Dr.
Altkönigstrasse 11a
W-6242 Kronberg/Taunus (DE)

EP 0 377 870 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Methyl-3,3-dialkoxy-1-propyl-phosphinsäureester der allgemeinen Formel I (siehe Patentanspruch 1), die entsprechenden Methyl-3-oxo-1-propyl-phosphinsäureester der allgemeinen Formel II (s. Patentanspruch 1) sowie ein Verfahren zu deren Herstellung.

Die erfindungsgemäßen Verbindungen finden Anwendung als Ausgangsmaterial für das Totalherbizid Phosphinothricin 4-Methylphosphinyl-2-aminobuttersäure $H_3C-PO(OH)-(CH_2)_2-CH(NH_2)-COOH$ (DE-OS 2717440).

Bei der Synthese des Phosphinothricins ist man nach den Angaben der Literatur (Gruszecka, E. et al., Rocz. Chem. 49 (1975) 12, 2127-2128, englisch ; Internationale Patentanmeldung WO 79-00405) bisher von Methyl-3-oxo-1-propyl-phosphinsäureäthyl- bzw. -isopropylester ausgegangen, die mit Cyanid und wäßriger Ammoniaklösung durch Strecker-Synthese umgesetzt wurden, also in einer aufwendigen, mehrstufigen Reaktionsfolge unter Mitverwendung sehr toxischer Reaktionspartner. Dies machte diesen Syntheseweg für eine industrielle Anwendung unattraktiv. Daher hat man in der Praxis nach anderen Wegen zur Herstellung des Phosphinothricins gesucht. So hat man Methyl-3-oxo-1-propyl-phosphinsäurealkylester, worin Alkyl 1 bis 4 C-Atome hat, insbesondere den Methyl- oder Chloräthylester, in einer Amidocarbonylierungsreaktion in Gegenwart eines Katalysators wie Kobalt- oder Rhodiumcarbonyl mit einem Carbonsäureamid, Kohlenmonoxid und wasserstoff in einem Schritt zu N-Acyl-phosphinothricinestern umgesetzt (EP-OS 292918).

Ein Ausführungsbeispiel wird für diese Reaktion nicht gegeben, sondern nur für die Umsetzung des Methyl-3-oxo-1-propyl-phosphinsäure-2-chloräthylesters mit Acetamid, CO und $H_2$, wobei sich das Benzoylamid-Derivat in 69 %iger Ausbeute bilden soll.

Die bekannten Verfahren zur Herstellung von Methyl-3,3-dialkoxy-1-propyl-phosphinsäureestern durch Arbusow-Reaktion von Methanphosphonigsäure-diestern mit 3,3-Dialkoxy-1-halogenpropanen sind in mehrfacher Hinsicht nachteilig und technisch nicht interessant. So ist das Alkylhalogenid, das sich aus der einen Esteralkylgruppe bildet, nicht mehr verwertbar. Außerdem sind die benötigten Methanphosphonigsäurediester technisch nicht einfach zugänglich.

In der EP-A 0009022 sind Methyl-3,3-dialkoxy-1-propyl-phosphinsäureester und die entsprechenden Oxoverbindungen gemäß den nachstehenden Formeln (I) und (II) beschrieben, wobei der Rest $R^1$ hier nur niedere Alkylgruppen mit 1 bis 5 C-Atomen bedeutet und konkret nur die Ethylgruppe genannt wird. Als Ausgangsstoffe für die Herstellung von Phosphinothricin auf dem oben beschriebenen Verfahrensweg liefern derartige Ethyl- oder Propylester nur vergleichsweise niedere Ausbeuten. Auch das in dieser Druckschrift beschriebene Herstellungsverfahren für die Verbindungen (I) bzw. (II) ist von der Ausbeute her für praktische Zwecke unbefriedigend.

Das in der DE-A 2.516.343 offenbarte Verfahren zur Herstellung von phosphorhaltigen Aldehyddiacylaten konnte dem Fachmann auch keinen Hinweis geben, welche Maßnahmen er zur Ausbeuteerhöhung bei der Herstellung von Methyl-3,3-dialkoxy-1-propylphosphinsäureestern ergreifen sollte.

Von verschiedenen Autoren ist beschrieben worden, daß Methyl-3,3-diäthoxy-1-propyl-phosphinsäureäthylester in hohen Ausbeuten erhalten werden kann. Im einen Fall (Jap-OS 55-64596) wird nach dem einzigen Beispiel ein Überschuß an Methanphosphonigsäureäthylester verwendet. Um diesen Überschuß wiederzugewinnen, ist nach den dortigen Angaben eine Destillation notwendig, die bei derartigen Verbindungen erfahrungsgemäß aufwendig ist. Über die Reinheit des zurückgewonnenen Esters sind keine Angaben gemacht. Nach einer anderen Arbeitsweise werden die Reaktionspartner zwar in gleichen molaren Mengen verwendet (Polish Journal of Chemistry 53, 937-39 (1979)) ; aber die Mischung soll nach Zugabe eines radikalbildenden Mittels erhitzt werden, bis die Reaktion erfolgt. Eine solche Arbeitsweise ist jedoch für eine technische Anwendung ungeeignet, weil sich die stark exotherme Reaktion nur schwer beherrschen läßt. Überdies ist die Ausbeute an gewünschtem Produkt nur mäßig.

Daher sind neue, wirtschaftliche Verfahren zur Herstellung von Acetalen der Formel (I), die derartige Nachteile nicht aufweisen, sehr erwünscht.

Gegenstand der vorliegenden Erfindung sind nun Methyl-3,3-dialkoxy-1-propyl-phosphinsäureester der Formel (I) und die entsprechenden 3-Oxo-Verbindungen der Formel (II)

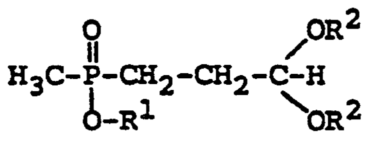 (I) 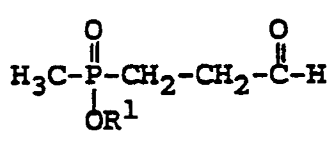 (II),

worin

$R^1$ ein Rest aus der Gruppe sec.-Butyl, n-Pentyl, 2-Methyl-butyl oder 3-Methyl-butyl, oder ein gesättigter, nichtaromatischer Kohlenwasserstoffrest mit 6 bis 10 C-Atomen ist und

$R^2$ gleiche oder verschiedene gesättigte, nicht-aromatische Kohlenwasserstoffreste mit 1 bis 8 C-Atomen darstellen, die auch zu einem Alkylenrest mit 2 bis 4 C-Atomen verbunden sein können.

Durch die Erfindung wird es ermöglicht, N-Acyl-phosphinothricinester in einer einfacheren Weise herzustellen, da die als Ausgangsstoffe verwendeten Methanphosphonigsäureester der Formel $H_3C\text{-}HPO\text{-}OR^1$ (III) im Gegensatz zu den homologen Verbindungen mit kleinerem Alkylrest in einfacherer Weise zugänglich sind, und zwar nach dem in der EP-A 81 694 beschriebenen Verfahren. Außerdem lassen sich nicht nur die 3-Oxoverbindungen (II), sondern auch die Verbindungen (I) in Derivate des Phosphinothricins überführen. Ein Umweg über die freien Oxoverbindungen ist dabei nicht notwendig (vgl. die ältere, nicht vorveröffentlichte deutsche Patentanmeldung P 3823885.3 vom 14.7.1988).

In den erfindungsgemäßen Verbindungen der Formel (I) bedeutet der Rest $R^1$ neben den weiter oben konkret genannten Gruppen (sec.-Butyl, n-Pentyl, 2-Methyl-butyl oder 3-Methyl-butyl) auch einen gesättigten, nicht-aromatischen Kohlenwasserstoffrest. Dieser ist vorzugsweise ein Alkylrest, er kann jedoch auch cyclischer Natur sein, wie Cyclohexyl, Cyclohexylmethyl (d.i. sowohl der hydrierte Benzyl- als auch der hydrierte Tolylrest). Als Alkylreste mit 6 bis 10 C-Atomen kommen für $R^1$ die verschiedenen Hexyl- und Octylreste, wie die n-Hexyl-, n-Octyl- und 2-Äthyl-hexyl-Reste sowie die verschiedenen Nonyl- und Decylreste in Frage.

Die Reste $R^2$ in der Formel (I) stehen vorzugsweise für gleiche oder verschiedene, gesättigte, nicht-aromatische Kohlenwasserstoffreste mit 1 bis 4 und insbesondere 1 bis 3 C-Atomen, die auch zu einem Alkylenrest mit vorzugsweise 3 C-Atomen verbunden sein können. Die Reste $R^2$ sind dabei bevorzugt Alkylreste, jedoch können sie, wie bei $R^1$, auch cyclischer Natur sein, wie Cyclopentyl, Cylohexyl, Cylohexylmethyl (d.i. sowohl der hydrierte Benzyl- als auch der hydrierte Tolylrest). Als Alkylreste kommen für $R^2$ z.B. Methyl, Äthyl und die verschiedenen Propylreste in Frage. Ferner die verschiedenen Butylreste, wie n-, iso-, sec.- und tert.-Butyl, die verschiedenen Pentylreste, wie die n-Pentyl, 2-Methyl- und 3-Methyl-butylreste, die verschiedenen Hexyl- und Octylreste, wie die n-Hexyl-, n-Octyl- und 2-Äthyl-hexyl-Reste.

In den Verbindungen der Formel (II) hat $R^1$ ebenfalls die zuvor angegebene Bedeutung ; jedoch sind diejenigen bevorzugt, in denen $R^1$ sec.-Butyl oder Alkyl mit 6 bis 10 C-Atomen ist.

Gegenstand der Erfindung ist weiterhin ein Verfahren zur Herstellung von Methyl-3,3-dialkoxy-1-propylphosphinsäureestern der Formel (I) und der entsprechenden 3-Oxo-Verbindungen der Formel (II)

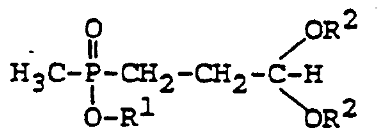 (I) 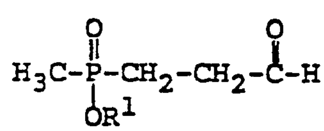 (II),

worin

$R^1$ ein gesättigter, nicht-aromatischer Kohlenwasserstoffrest mit 4 bis 10 C-Atomen und

$R^2$ gleiche oder verschiedene gesättigte, nicht-aromatische Kohlenwasserstoffreste mit 1 bis 8 C-Atomen darstellen, die auch zu einem Alkylenrest mit 2 bis 4 C-Atomen verbunden sein können,

dadurch gekennzeichnet, daß man zu einem Methanphosphonigsäureester der Formel $H_3C\text{-}HPO\text{-}OR^1$ (III), worin $R^1$ die vorstehende Bedeutung hat, unter der Einwirkung von radikalbildenden Mitteln und bei einer Temperatur oberhalb der Anspringtemperatur der Reaktion ein Acroleinacetal der Formel $H_2C{=}CH\text{-}CH(OR^2)_2$ (IV), worin $R^2$ gleichfalls die vorstehende Bedeutung hat, bei diskontinuierlicher Arbeitsweise so lange zudosiert, bis etwa die gleichmolare Menge hinzugesetzt ist, oder daß man bei kontinuierlicher Arbeitsweise gleichmolare Mengen der beiden Ausgangsstoffe (III) und (IV) unter den genannten Bedingungen in einer Reaktionszone unter Temperaturkontrolle umsetzt und die gebildeten Verbindungen der Formel (I) isoliert oder deren Acetalbindungen in üblicher Weise spaltet.

Die Reaktion zur Herstellung der Verbindungen (I) ist stark exotherm. Sie wird daher zweckmäßig über die Geschwindigkeit gesteuert, mit der das Acroleinacetal und/oder der Radikalbildner zudosiert werden, und gegebenfalls auch zusätzlich über Kühlen.

Es war nicht zu erwarten, daß sich die erfindungsgemäßen Ester der Formel (I) nach diesem Verfahren in so hohen Ausbeuten erhalten lassen, da sich bei vergleichsbaren radikalischen Additionen von Methanphosphonigsäureestern an Derivate des Acroleins ähnlich hohe Ausbeuten nur erreichen lassen, wenn beträchtliche

Überschüsse der Phosphorkomponente verwendet werden (DE-A 2516341 ; EP-A 11245).

Bei der Herstellung der Verbindungen der Formel (II) werden die Acetalbindungen der zunächst hergestellten Ester der Formel (I) nach üblichen Methoden, z.B. gemäß der Jap-OS 55-64596 mit Ameisensäure oder mit sauren Agenzien wie verdünnten Mineralsäuren oder in wäßrigem Medium in Gegenwart von sauren Ionenaustauschern, gespalten. Man gelangt so zu den erfindungsgemäßen Aldehyden der Formel (II).

Als radikalbildende Mittel eignen sich Verbindungen, die im Temperaturbereich von 70-170°C, vorzugsweise 75-130°C, Radikale erzeugen, wie Di-tert.-butyl-, Dipropionyl-, Dilauroyl-, Dibenzoyl- und p-Chlorbenzoylperoxid, tert.-Butylperacetat, -perpropionat, -perisobutyrat, -peroctoat, -perisononanoat, -perneodecanoat und -perbenzoat, Azobisisobutyronitril, tert.-Butyl- und Cumolhydroperoxid oder Gemische davon. Diese Verbindungen werden im allgemeinen in einer Menge von 0,1-5 Mol-%, vorzugsweise von 0,5-3 Mol-% und besonders bevorzugt von 0,5-1,5 Mol-% angewendet, jeweils bezogen auf das Acetal.

Als radikalbildende Mittel können auch radikalbildende Strahlungsquellen wie UV-, γ-, Elektronen- oder Röntgenstrahlen verwendet werden, gegebenenfalls zusätzlich zu den radikalbildenden Verbindungen.

Die Acroleinacetale der Formel IV können nach aus der Literatur bekannten Verfahren aus Acrolein und den entsprechenden Alkoholen $R^2OH$ hergestellt werden und sind zum Teil im Handel erhältlich.

Das erfindungsgemäße Verfahren zur Herstellung der Ester der Formel I wird vorteilhaft durchgeführt, indem man zu dem Methanphosphonigsäureester unter Schutzgasatmosphäre, wie Kohlendioxyd, Stickstoff oder Argon, und unter lebhaftem Durchmischen das Acroleinacetal unter gleichzeitiger Einwirkung des radikalbildenden Mittels zudosiert. Dabei wird die radikalbildende Verbindung vorzugsweise dem Acroleinacetal beigemischt. Sie kann jedoch auch gleichzeitig mit dem Acroleinacetal IV in das Reaktionsgefäß eindosiert werden. Sofern sie nicht in flüssiger Form als Ausgangsmaterial vorliegt, wird sie zweckmäßig in Form einer Lösung in einem Lösungsmittel, das unter den Reaktionsbedingungen inert ist, bzw. einer Mischung mit einem Teil des Methanphosphonigsäureesters zugeführt.

Die Reaktionstemperatur liegt im allgemeinen zwischen 70 und 170°C, besonders bevorzugt aber zwischen 75 und 130°C. Sie muß aber in jedem Fall so hoch gewählt werden, daß bei ihr eine zuverlässige Wirkung des radikalbildenden Mittels gewährleistet ist. Das heißt also bei Verwendung eines Radikalbildners, daß dessen thermischer Zerfall in ausreichendem Maße erfolgt. Die Reaktionsdauer beträgt je nach Temperatur und Größenordnung des Ansatzes 0,5 bis 24 Stunden.

Die Reaktion wird bevorzugt ohne Mitverwendung von Lösungsmitteln durchgeführt, also abgesehen von den Mengen, die gegebenenfalls mit einem radikalbildenden Stoff eingeführt werden. Falls gewünscht, können jedoch organische Verdünnungsmittel, die unter den Reaktionsbedingungen gegenüber den Reaktionsteilnehmern inert sind, wie Toluol, die verschiedenen Xylole, Chlorbenzol, Dioxan verwendet werden ; im allgemeinen sind damit jedoch keine Vorteile verbunden.

Gewöhnlich wird das Verfahren bei Atmosphärendruck durchgeführt ; es kann aber auch unter erhöhtem Druck gearbeitet werden.

Die Reaktionsprodukte der Formel I fallen im allgemeinen als Flüssigkeiten mit einer Reinheit von 85-95% an ; diese reicht für die Weiterverwendung als Ausgangsstoff für die Amidocarbonylierung zu Derivaten des Phosphinothricins aus. Natürlich ist auch eine weitere Reinigung, z.B. durch Destillation unter vermindertem Druck, möglich.

In den folgenden Beispielen beziehen sich die Prozentangaben der Ausbeute auf die Theorie.

**Beispiele**

**1 bis 11 — Methyl-3,3-dialkoxy-1-propyl-phosphinsäureester I**

Allgemeine Vorschrift zur Herstellung

Zu 0,7 mol Methanphosphonigsäureester III, der unter Stickstoffatmosphäre auf 110°C erwärmt wurde, tropfte man unter lebhaftem Rühren eine unter Stickstoff gehaltene, frisch hergestellte Mischung aus 0,7 mol Acroleindialkylacetal IV und 0,0035 mol (= 855 mg) tert.-Butyl-perneodecanoat so zu, daß die Innentemperatur 125°C nicht überstieg. Nach beendeter Zugabe wurde noch 2 h bei 110°C gerührt.

Der Gehalt des Rohproduktes an der Verbindung I wurde mittels $^{31}P$-NMR-Spektroskopie ermittelt und lag im allgemeinen zwischen 85 und 95% vom Gesamt-P. Die Reinigung der erfindungsgemäßen Verbindungen erfolgte durch Fraktionieren bzw. Dünnschichtdestillation im Hochvakuum.

**1) Methyl-3,3-diäthoxy-1-propyl-phosphinsäure-n-butylester :**

Ausgehend von 95,3 g Methanphosphonigsäure-n-butylester und 91,1 g Acroleindiäthylacetal erhielt man

160 g (= 85,8%) der Verbindung als farbloses Öl vom Kp 114-115°C/0,05 mbar, $n_D^{20}$ = 1,4420.

| | | | | |
|---|---|---|---|---|
| $C_{12}H_{27}O_4P$ | Ber.: | 54,12 % C | 10,22 % H | 11,62 % P |
| (266,31) | Gef.: | 53,7 % C | 10,45 % H | 11,7 % P |

Wiederholte man die Reaktion, indem man das Ausgangsmaterial auf 80°C erhitzte und die Temperatur nicht über 100°C ansteigen ließ, so erhielt man das gleiche Produkt in einer Ausbeute von 83%.

**2) Methyl-3 3-diäthoxy-1-propyl-phosphinsäure-n-pentylester :**

Ausgehend von 105,1 g Methanphosphonigsäure-n-pentylester und 91,1 g Acroleindiäthylacetal erhielt man 170 g (= 86,6%) der Verbindung als farbloses Öl vom Kp 126-127°C/0,1 mbar, $n_D^{25}$ = 1,4412.

| | | | | |
|---|---|---|---|---|
| $C_{13}H_{29}O_4P$ | Ber.: | 55,7 % C | 10,42 % H | 11,04 % P |
| (280,34) | Gef.: | 56,0 % C | 10,7 % H | 10,8 % P |

**3) Methyl-3,3-diäthoxy-1-propyl-phosphinsäure-n-hexylester :**

Ausgehend von 114,9 g Methanphosphonigsäure-n-hexylester und 91,1 g Acroleinsäurediäthylacetal erhielt man 186 g (= 90,2%) der Verbindung als farbloses Öl vom Kp 136°C/0,05 mbar, $n_D^{20}$ = 1,4455.

| | | | | |
|---|---|---|---|---|
| $C_{14}H_{31}O_4P$ | Ber.: | 57,12 % C | 10,61 % H | 10,52 % P |
| (294,36) | Gef.: | 57,0 % C | 10,8 % H | 10,8 % P |

**4) Methyl-3,3-diäthoxy-1-propyl-phosphinsäure-isobutylester :**

Ausgehend von 95,3 g Methanphosphonigsäure-isobutylester und 91,1 g Acroleindiäthylacetal erhielt man 164 g (= 88%) der Verbindung als farbloses Öl vom Kp 107-108°C/0,05 mbar, $n_D^{20}$ = 1,4385.

| | | | | |
|---|---|---|---|---|
| $C_{12}H_{27}O_4P$ | Ber.: | 54,12 % C | 10,21 % H | 11,62 % P |
| (266,31) | Gef.: | 53,8 % C | 10,2 % H | 11,5 % P |

**5) Methyl-3,3-dimethoxy-1-propyl-phosphinsäure-isobutylester :**

Ausgehend von 95,3 g Methanphosphonigsäure-isobutylester und 71,5 g Acroleindimethylacetal erhielt man 142 g (= 85,1%) der Verbindung als farbloses Öl vom Kp 110 bis 111°C/0,1 mbar, $n_D^{20}$ = 1,4417.

| | | | | |
|---|---|---|---|---|
| $C_{10}H_{23}O_4P$ | Ber.: | 50,41 % C | 9,73 % H | 12,99 % P |
| (238,26) | Gef.: | 50,1 % C | 10,0 % H | 12,6 % P |

6) **Methyl-3,3-diäthoxy-1-propyl-phosphinsäure-(2-methyl-butyl)-ester :**

Ausgehend von 105,1 g Methanphosphonigsäure-(2-methyl-butyl)-ester und 91,1 g Acroleindiäthylacetal erhielt man 165 g (= 84%) der Verbindung als farbloses Öl vom Kp 122-123°C/0,05 mbar, $n_D^{20}$ = 1,4430.

| | | | | |
|---|---|---|---|---|
| $C_{13}H_{29}O_4P$ | Ber.: | 55,69 % C | 10,42 % H | 11,04 % P |
| (280,34) | Gef.: | 56,0 % C | 10,7 % H | 11,4 % P |

7) **Methyl-3,3-dimethoxy-1-propyl-phosphinsäure-(2-methyl-butyl)-ester :**

Ausgehend von 105,1 g Methanphosphonigsäure-(2-methyl-butyl)-ester und 71,5 g Acroleindimethylacetal erhielt man 152 g (= 86,0%) der Verbindung als farbloses Öl vom Kp 108°C/0,05 mbar, $n_D^{20}$ = 1,4445.

| | | | | |
|---|---|---|---|---|
| $C_{11}H_{25}O_4P$ | Ber.: | 52,36 % C | 9,98 % H | 12,27 % P |
| (252,28) | Gef.: | 51,9 % C | 9,7 % H | 12,6 % P |

8) **Methyl-3,3-diäthoxy-1-propyl-phosphinsäure-(3-methyl-butyl)-ester :**

Ausgehend von 105,1 g Methanphosphonigsäure-(3-methyl-butyl)-ester und 91,13 g Acroleindiäthylacetal erhielt man 165 g (= 84%) der Verbindung als farbloses Öl vom Kp 133-134°C/0,2 mbar, $n_D^{21}$ = 1,4418.

| | | | | |
|---|---|---|---|---|
| $C_{13}H_{29}O_4P$ | Ber.: | 55,69 % C | 10,42 % H | 11,04 % P |
| (280,34) | Gef.: | 55,4 % C | 10,0 % H | 11,3 % P |

9) **Methyl-3,3-dimethoxy-1-propyl-phosphinsäure-(3-methyl-butyl)-ester :**

Ausgehend von 105,1 g Methanphosphonigsäure-(3-methyl-butyl)-ester und 71,5 g Acroleindimethylacetal erhielt man 141 g (= 79,8%) der Verbindung als farbloses Öl vom Kp 114°C/0,05 mbar, $n_D^{20}$ = 1,4437.

10) **Methyl-3,3-diäthoxy-1-propyl-phosphinsäure-(2-äthyl-hexyl)-ester :**

Ausgehend von 134,6 g Methanphosphonigsäure-(2-äthyl-hexyl)-ester und 91,1 g Acroleindiäthylacetal erhielt man nach Destillation am Dünnschichtverdampfer bei 170°C/0,9 mbar 186 g (= 82,4%) der Verbindung als farbloses Öl, $n_D^{20}$ = 1,4462.

| | | | | |
|---|---|---|---|---|
| $C_{16}H_{35}O_4P$ | Ber.: | 59,60 % C | 10,94 % H | 9,60 % P |
| (322,42) | Gef.: | 58,6 % C | 10,5 % H | 10,2 % P |

11) **Methyl-3,3-dimethoxy-1-propyl-phosphinsäure-(2-äthyl-hexyl)-ester :**

Ausgehend von 134,6 g Methanphosphonigsäure-(2-äthyl-hexyl)-ester und 71,5 g Acroleindimethylacetal erhielt man nach Destillation am Dünnschichtverdampfer bei 160°C/0,05 mbar 182 g (= 88,3%) der Verbindung als farbloses Öl, $n_D^{21}$ = 1,4485.

| | | | |
|---|---|---|---|
| $C_{14}H_{31}O_4P$ | Ber.: 57,12 % C | 10,61 % H | 10,52 % P |
| (294,36) | Gef.: 56,6 % C | 10,9 % H | 11,0 % P |

**12 bis 18 - Methyl-3-oxo-1-propyl-phosphinsäureester II**

Allgemeine Vorschrift zur Spaltung der Methyl-3,3-dialkoxy-1-propyl-phosphinsäureester mit Ameisensäure

Zu 0,3 mol Methyl-3,3-dialkoxy-1-propyl-phosphinsäureester gab man bei Raumtemperatur unter lebhaftem Rühren 55,2 g (= 1,2 mol) wasserfreie Ameisensäure und erhitzte 1 Stunde lang auf 90-100°C, wobei entstehender Ameisensäurealkylester kontinuierlich abdestilliert wurde. Nach Entfernung von überschüssiger Ameisensäure im Hochvakuum verblieben die Methyl-3-oxo-1-propyl-phosphinsäureester als Rückstand. Eine weitere Aufarbeitung ist nicht erforderlich. Zur Ermittlung der Siedepunkte wurden die Produkte unter vermindertem Druck destilliert.

**12) Methyl-3-oxo-1-propyl-phosphinsäure-n-butylester :**

Ausgehend von 79,9 g Methyl-3,3-diäthoxy-1-propyl-phosphinsäure-n-butylester (Beispiel 1) erhielt man 49 g (= 85%) der Verbindung als farbloses Öl vom Kp 115-116°C/0,08 mbar, $n_D^{22}$ = 1,4534.

| | | | |
|---|---|---|---|
| $C_8H_{17}O_3P$ | Ber.: 50,0 % C | 8,91 % H | 16,11 % P |
| (192,19) | Gef.: 49,9 % C | 9,1 % H | 16,3 % P |

**13) Methyl-3-oxo-1-propyl-phosphinsäure-n-pentylester :**

Ausgehend von 84,1 g Methyl-3,3-diäthoxy-1-propyl-phosphinsäure-n-pentylester (Beispiel 2) erhielt man 56 g (= 90,5%) der Verbindung als farbloses Öl vom Kp 119-120°C/0,05 mbar, $n_D^{22}$ = 1,4525.

| | | | |
|---|---|---|---|
| $C_9H_{19}O_3P$ | Ber.: 52,42 % C | 9,28 % H | 15,01 % P |
| (206,21) | Gef.: 52,3 % C | 9,5 % H | 15,4 % P |

**14) Methyl-3-oxo-1-propyl-phosphinsäure-n-hexylester :**

Ausgehend von 88,3 g Methyl-3,3-diäthoxy-1-propyl-phosphinsäure-n-hexylester (Beispiel 3) erhielt man 59 g (= 89,3%) der Verbindung als farbloses Öl vom Kp 115-116°C/0,01 mbar, $n_D^{20}$ = 1,4550.

| | | | |
|---|---|---|---|
| $C_{10}H_{21}O_3P$ | Ber.: 54,53 % C | 9,61 % H | 14,06 % P |
| (220,24) | Gef.: 54,0 % C | 9,9 % H | 14,1 % P |

**15) Methyl-3-oxo-1-propyl-phosphinsäure-isobutylester :**

Ausgehend von 79,9 g Methyl-3,3-diäthoxy-1-propyl-phosphinsäure-isobutylester (Beispiel 4) erhielt man 49 g (= 85,0%) der Verbindung als farbloses Öl vom Kp 112-113°C/0,05 mbar, $n_D^{23}$ = 1,4510.

| | | | | |
|---|---|---|---|---|
| $C_8H_{17}O_3P$ | Ber.: | 50,0 % C | 8,91 % H | 16,11 % P |
| (192,19) | Gef.: | 49,7 % C | 9,1 % H | 16,5 % P |

**16) Methyl-3-oxo-1-propyl-phosphinsäure-(2-methyl-butyl)-ester :**

Ausgehend von 84,1 g Methyl-3,3-diäthoxy-1-propyl-phosphinsäure-(2-methyl-butyl)-ester (Beispiel 6) erhielt man 52 g (= 84,0%) der Verbindung als farbloses Öl vom Kp 120-121°C/0,05 mbar, $n_D^{23}$ = 1,4545.

| | | | | |
|---|---|---|---|---|
| $C_9H_{19}O_3P$ | Ber.: | 52,42 % C | 9,28 % H | 15,01 % P |
| (206,21) | Gef.: | 52,2 % C | 9,5 % H | 15,3 % P |

**17) Methyl-3-oxo-1-propyl-phosphinsäure-(3-methyl-butyl)-ester :**

Ausgehend von 75,7 g Methyl-3,3-dimethoxy-1-propyl-phosphinsäure-(3-methyl-butyl)-ester (Beispiel 9) erhielt man 53 g (= 85,6%) der Verbindung als farbloses Öl vom Kp 105-106°C/0,05 mbar, $n_D^{23}$ = 1,4535.

| | | | | |
|---|---|---|---|---|
| $C_9H_{19}O_3P$ | Ber.: | 52,42 % C | 9,28 % H | 15,01 % P |
| (206,21) | Gef.: | 52,5 % C | 9,3 % H | 14,8 % P |

**18) Methyl-3-oxo-1-propyl-phosphinsäure-(2-äthyl-hexyl)-ester :**

Ausgehend von 88,3 g Methyl-3,3-dimethoxy-1-propyl-phosphinsäure-(2-äthyl-hexyl)-ester (Beispiel 11) erhielt man 58 g (= 77,8%) der Verbindung als farbloses Öl vom Kp 124-125°C/0,05 mbar, $n_D^{22}$ = 1,4570.

| | | | | |
|---|---|---|---|---|
| $C_{12}H_{25}O_3P$ | Ber.: | 58,04 % C | 10,15 % H | 12,47 % P |
| (248,30) | Gef.: | 57,1 % C | 10,6 % H | 13,0 % P |

## Patentansprüche

**Patentansprüche für die Vertragsstaaten : AT, BE, CH, DE, FR, GB, IT, LI, NL**

1. Methyl-3,3-dialkoxy-1-propyl-phosphinsäureester der Formel (I) und die entsprechenden 3-Oxo-Verbindungen der Formel (II)

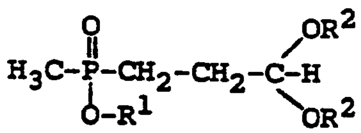 (I) 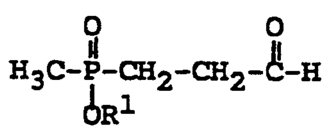 (II),

worin

R1 ein Rest aus der Gruppe sec.-Butyl, n-Pentyl, 2-Methyl-butyl oder 3-Methyl-butyl, oder ein gesättigter, nicht-aromatischer Kohlenwasserstoffrest mit 6 bis 10 C-Atomen ist und

R2 gleiche oder verschiedene gesättigte, nicht-aromatische Kohlenwasserstoffreste mit 1 bis 8 C-Atomen

darstellen, die auch zu einem Alkylenrest mit 2 bis 4 C-Atomen verbunden sein können.

2. Verbindungen nach Anspruch 1, dadurch gekennzeichnet, daß $R^1$ und/oder $R^2$ Alkyl sind.

3. Verbindungen nach Anspruch 1 oder 2, dadurch gekennzeichnet, daß $R^1$ 6 C-Atome enthält.

4. Verbindungen nach einem oder mehreren der Ansprüche 1 bis 3, dadurch gekennzeichnet, daß Jeder der Reste $R^2$ oder, wenn beide zu einem Alkylenrest verbunden sind, beide zusammen höchstens 4, bevorzugt höchstens 3 C-Atome enthalten.

5. Verbindungen der Formel (II) nach einem oder mehreren der Ansprüche 1 bis 3, dadurch gekennzeichnet, daß $R^1$ Alkyl mit 6 C-Atomen ist.

6. Verbindungen der Formeln (I) oder (II), wie in Anspruch 1 gezeigt, dadurch gekennzeichnet, daß $R^1$ den n- oder iso-Butylrest und $R^2$, im Falle von Verbindungen der Formel (I), den Ethylrest darstellen.

7. Verbindung der Formel (I), wie in Anspruch 1 gezeigt, dadurch gekennzeichnet, daß $R^1$ den iso-Butylrest und $R^2$ den Methylrest darstellen.

8. Verfahren zur Herstellung von Methyl-3,3-dialkoxy-1-propyl-phosphinsäureestern der Formel (I) und der entsprechenden 3-Oxo-verbindungen der Formel (II)

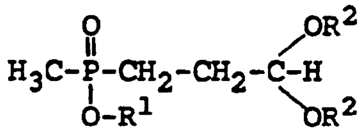 (I) 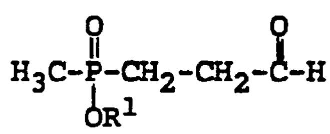 (II),

worin

$R^1$ ein gesättigter, nicht-aromatischer Kohlenwasserstoffrest mit 4 bis 10 C-Atomen und

$R^2$ gleiche oder verschiedene gesättigte, nicht-aromatische Kohlenwasserstoffreste mit 1 bis 8 C-Atomen darstellen, die auch zu einem Alkylenrest mit 2 bis 4 C-Atomen verbunden sein können,

dadurch gekennzeichnet, daß man zu einem Methanphosphonigsäureester der Formel $H_3C\text{-}HPO\text{-}OR^1$ (III), worin $R^1$ die vorstehende Bedeutung hat, unter der Einwirkung von radikalbildenden Mitteln und bei einer Temperatur oberhalb der Anspringtemperatur der Reaktion ein Acroleinacetal der Formel $H_2C\text{=}CH\text{-}CH(OR^2)_2$ (IV), worin $R^2$ gleichfalls die vorstehende Bedeutung hat, bei diskontinuierlicher Arbeitsweise so lange zudosiert, bis etwa die gleichmolare Menge hinzugesetzt ist, oder daß man bei kontinuierlicher Arbeitsweise gleichmolare Mengen der beiden Ausgangsstoffe (III) und (IV) unter den genannten Bedingungen in einer Reaktionszone unter Temperaturkontrolle umsetzt und die gebildeten verbindungen der Formel (I) isoliert oder deren Acetalbindungen in üblicher Weise spaltet.

9. Verfahren nach Anspruch 8, dadurch gekennzeichnet, daß die Umsetzung bei Temperaturen von 70 bis 170°C, vorzugsweise von 75 bis 130°C durchgeführt wird.

10. Verfahren nach Anspruch 8 oder 9, dadurch gekennzeichnet, daß eine radikalbildende verbindung In einer Menge von 0,1 bis 5 Mol-%, vorzugsweise von 0,5 bis 3 Mol-%, insbesondere von 0,5 bis 1,5 Mol-% mitverwendet wird.

11. Verfahren nach einem oder mehreren der Ansprüche 8 bis 10, dadurch gekennzeichnet, daß als radikalbildendes Mittel eine radikalbildende Strahlung dient.

12. Verfahren nach einem oder mehreren der Ansprüche 8 bis 11, dadurch gekennzeichnet, daß man die Umsetzung unter Schutzgasatmosphäre und unter lebhaftem Durchmischen durchführt.

13. Verfahren nach einem oder mehreren der Ansprüche 8 bis 12, dadurch gekennzeichnet, daß als verbindungen (III) solche eingesetzt werden, bei denen $R^1$ ein Alkylrest mit 4 bis 6 C-Atomen ist.

14. Verfahren nach mindestens einem oder mehreren der Ansprüche 8 bis 13, dadurch gekennzeichnet, daß als verbindungen (IV) solche eingesetzt werden, bei denen jeder der Reste $R^2$ oder, wenn beide zu einem Alkylenrest verbunden sind, beide zusammen höchstens 4, bevorzugt höchstens 3 C-Atome enthalten.

15. Verwendung der Methyl-3,3-dialkoxy-1-propyl-phosphinsäureester (I) oder der 3-Oxoverbindungen (II) gemäß einem oder mehreren der Ansprüche 1 bis 5 als Ausgangsstoff zur Herstellung von Derivaten des Phosphinothricins.

**Patentansprüche für den Vertragsstaat : ES**

1. Verfahren zur Herstellung von Methyl-3,3-dialkoxy-1-propyl-phosphinsäureestern der Formel (I) und der entsprechenden 3-Oxo-Verbindungen der Formel (II)

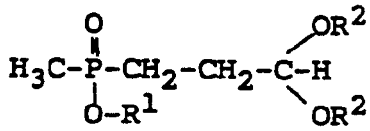

(I)

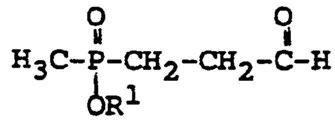

(II),

worin

$R^1$ ein gesättigter, nicht-aromatischer Kohlenwasserstoffrest mit 4 bis 10 C-Atomen und
$R^2$ gleiche oder verschiedene gesättigte, nicht-aromatische Kohlenwasserstoffreste mit 1 bis 8 C-Atomen darstellen, die auch zu einem Alkylenrest mit 2 bis 4 C-Atomen verbunden sein können,

dadurch gekennzeichnet, daß man zu einem Methanphosphonigsäureester der Formel $H_3C$-HPO-$OR^1$ (III), worin $R^1$ die vorstehende Bedeutung hat, unter der Einwirkung von radikalbildenden Mitteln und bei einer Temperatur oberhalb der Anspringtemperatur der Reaktion ein Acroleinacetal der Formel $H_2C=CH-CH(OR^2)_2$ (IV), worin $R^2$ gleichfalls die vorstehende Bedeutung hat, bei diskontinuierlicher Arbeitsweise so lange zudosiert, bis etwa die gleichmolare Menge hinzugesetzt ist, oder daß man bei kontinuierlicher Arbeitsweise gleichmolare Mengen der beiden Ausgangsstoffe (III) und (IV) unter den genannten Bedingungen in einer Reaktionszone unter Temperaturkontrolle umsetzt und die gebildeten Verbindungen der Formel (I) isoliert oder deren Acetalbindungen in üblicher Weise spaltet.

2. Verfahren nach Anspruch 1, dadurch gekennzeichnet, daß die Umsetzung bei Temperaturen von 70 bis 170°C, vorzugsweise von 75 bis 130°C durchgeführt wird.

3. Verfahren nach Anspruch 1 oder 2, dadurch gekennzeichnet, daß eine radikalbildende Verbindung in einer Menge von 0,1 bis 5 Mol-%, vorzugsweise von 0,5 bis 3 Mol-%, insbesondere von 0,5 bis 1,5 Mol-% mitverwendet wird.

4. Verfahren nach einem oder mehreren der Ansprüche 1 bis 3, dadurch gekennzeichnet, daß als radikalbildendes Mittel eine radikalbildende Strahlung dient.

5. Verfahren nach einem oder mehreren der Ansprüche 1 bis 4, dadurch gekennzeichnet, daß man die Umsetzung unter Schutzgasatmosphäre und unter lebhaftem Durchmischen durchführt.

6. Verfahren nach einem oder mehreren der Ansprüche 1 bis 5, dadurch gekennzeichnet, daß als Verbindungen (III) solche eingesetzt werden, bei denen $R^1$ ein Alkylrest mit 4 bis 6 C-Atomen ist.

7. Verfahren nach mindestens einem oder mehreren der Ansprüche 1 bis 6, dadurch gekennzeichnet, daß als Verbindungen (IV) solche eingesetzt werden, bei denen jeder der Reste $R^2$ oder, wenn beide zu einem Alkylenrest verbunden sind, beide zusammen höchstens 4, bevorzugt höchstens 3 C-Atome enthalten.

8. Verwendung von Methyl-3,3-dialkoxy-1-propyl-phosphinsäureester oder von 3-Oxoverbindungen der Formeln (I) oder (II), wie in Anspruch 1 gezeigt, wobei $R^1$ ein Rest aus der Gruppe sec.-Butyl, n-Pentyl, 2-Methylbutyl oder 3-Methyl-butyl, oder ein gesättigter, nicht-aromatischer Kohlenwasserstoffrest mit 6 bis 10 C-Atomen ist und $R^2$ die gleiche Bedeutung wie in Anspruch 1 besitzt als Ausgangsstoff zur Herstellung von Derivaten des Phosphinothricins.

## Claims

### Claims for the Contracting States : At, BE, CH, DE, FR, GB, IT, LI, NL

1. Methyl-3,3-dialkoxy-1-propylphosphinic acid esters of the formula (I) and the corresponding 3-oxo compounds of the formula (II)

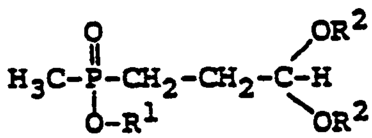

(I)

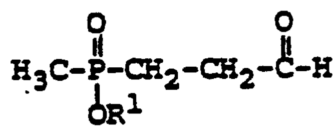

(II)

where

$R^1$ is a radical from the group comprising sec.butyl, n-pentyl, 2-methylbutyl or 3-methylbutyl, or a saturated, non-aromatic hydrocarbon radical having 6 to 10 carbon atoms and

$R^2$ are each identical or different, saturated, non-aromatic hydrocarbon radicals having 1 to 8 carbon atoms, which can also be linked to form an alkylene radical having 2 to 4 carbon atoms.

2. A compound as claimed in claim 1, wherein $R^1$ and/or $R^2$ are alkyl.

3. A compound as claimed in claim 1 or 2, wherein $R^1$ contains 6 carbon atoms.

4. A compound as claimed in one or more of claims 1 to 3, wherein each of the radicals $R^2$, or, when both are linked to form an alkylene radical, the two together contain not more than 4, preferably not more than 3, carbon atoms.

5. A compound of the formula (II) as claimed in one or more of claims 1 to 3, wherein $R^1$ is alkyl having 6 carbon atoms.

6. A compound of the formulae (I) or (II) as shown in claim 1, wherein $R^1$ is the n- or isobutyl radical and $R^2$, in the case of compounds of the formula (I), is the ethyl radical.

7. A compound of the formula (I) as shown in claim 1, wherein $R^1$ is the isobutyl radical and $R^2$ is the methyl radical.

8. A process for preparing methyl-3,3-dialkoxy-1-propylphosphinic acid esters of the formula (I) and the corresponding 3-oxo compounds of the formula (II)

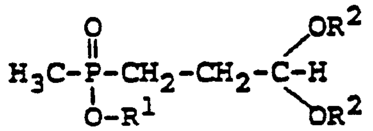 (I) 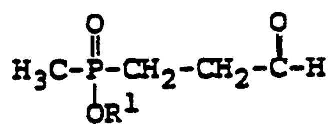 (II)

where

$R^1$ is a saturated, non-aromatic hydrocarbon radical having 4 to 10 carbon atoms and
$R^2$ are each identical or different, saturated, non-aromatic hydrocarbon radicals having 1 to 8 carbon atoms, which can also be linked to form an alkylene radical having 2 to 4 carbon atoms,

which comprises metering an acrolein acetal of the formula $H_2C{=}CH\text{-}CH\ (OR^2)_2$ (IV), where $R^2$ also has the above meaning, into a methanephosphonous acid ester of the formula $H_2C\text{-}HPO\text{-}OR^1$ (III), where $R^1$ has the above meaning, with the action of free-radical forming agents and at a temperature above the starting temperature of the reaction in a batchwise procedure until an approximately equimolar amount has been added, or, in the case of a continuous procedure, reacting equimolar amounts of the two starting substances (III) and (IV) under the conditions mentioned in a reaction zone with the temperature being monitored, the compounds of the formula (I) formed being isolated or the acetal bonds thereof being cleaved in a customary manner.

9. The process as claimed in claim 8, wherein the reaction is carried out at temperatures from 70 to 170°C, preferably from 75 to 130°C.

10. The process as claimed in claim 8 or 9, with the concomitant use of a free-radical forming compound in an amount of 0.1 to 5 mol%, preferably of 0.5 to 3 mol%, in particular of 0.5 to 1.5 mol%.

11. The process as claimed in one or more of claims 8 to 10, wherein free-radical forming radiation is used as free-radical forming agent.

12. The process as claimed in one or more of claims 8 to 11, wherein the reaction is carried out under a protective gas atmosphere and with vigorous mixing.

13. The process as claimed in one or more of claims 8 to 12, wherein the compounds (III) employed are those in which $R^1$ is an alkyl radical having 4 to 6 carbon atoms.

14. The process as claimed in at least one or more of claims 8 to 13, wherein the compounds (IV) employed are those in which each of the radicals $R^2$, or, when both are linked to form an alkylene radical, the two together contain not more than 4, preferably not more than 3, carbon atoms.

15. The use of the methyl-3,3-dialkoxy-1-propylphosphinic acid esters (I) or of the 3-oxo compounds (II) as claimed in one or more of claims 1 to 5 as starting substance for the preparation of phosphinothricin derivatives.

**Claims for the Contracting State : ES**

1. A process for preparing methyl-3,3-dialkoxy-1-propylphosphinic acid esters of the formula (I) and the corresponding 3-oxo compounds of the formula (II)

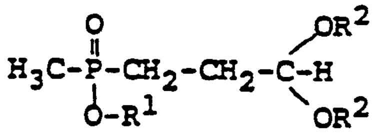 (I) 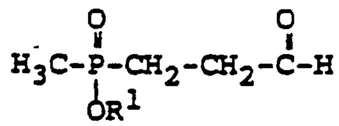 (II)

where

- $R^1$ is a saturated, non-aromatic hydrocarbon radical having 4 to 10 carbon atoms and
- $R^2$ are each identical or different, saturated, non-aromatic hydrocarbon radicals having 1 to 8 carbon atoms, which can also be linked to form an alkylene radical having 2 to 4 carbon atoms

which comprises metering an acrolein acetal of the formula $H_2C{=}CH\text{-}CH\ (OR^2)_2$ (IV), where $R^2$ also has the above meaning, into a methanephosphonous acid ester of the the formula $H_3C\text{-}HPO\text{-}OR^1$ (III), where $R^1$ has the above meaning, with the action of free-radical forming agents and at a temperature above the starting temperature of the reaction in a batchwise procedure until an approximately equimolar amount has been added, or, in the case of a continuous procedure, reacting equimolar amounts of the two starting substances (III) and (IV) under the conditions mentioned in a reaction zone with the temperature being monitored, the compounds of the formula (I) formed being isolated or the acetal bonds thereof being cleaved in a customary manner.

2. The process as claimed in claim 1, wherein the reaction is carried out at temperatures from 70 to 170°C, preferably from 75 to 130°C.

3. The process as claimed in claim 1 or 2, with the concomitant use of a free-radical forming compound in an amount of 0.1 to 5 mol%, preferably of 0.5 to 3 mol%, in particular of 0.5 to 1.5 mol%.

4. The process as claimed in one or more of claims 1 to 3, wherein free-radical forming radiation is used as free-radical forming agent.

5. The process as claimed in one or more of claims 1 to 4, wherein the reaction is carried out under a protective gas atmosphere and with vigorous mixing.

6. The process as claimed in one or more of claims 1 to 5, wherein the compounds (III) employed are those in which $R^1$ is an alkyl radical having 4 to 6 carbon atoms.

7. The process as claimed in at least one or more of claims 1 to 6, wherein the compounds (IV) employed are those in which each of the radicals $R^2$, or, when both are linked to form an alkylene radical, the two together contain not more than 4, preferably not more than 3, carbon atoms.

8. The use of methyl-3,3-dialkoxy-1-propylphosphinic acid esters or of 3-oxo compounds of the formulae (I) or (II), as shown in claim 1, wherein $R^1$ is a radical from the group comprising sec.-butyl, n-pentyl, 2-methylbutyl, or 3-methylbutyl or a saturated, non-aromatic hydrocarbon radical having 6 to 10 carbon atoms and $R^2$ is as defined as in claim 1, as starting substance for the preparation of phosphinothricin derivatives.

## Revendications

**Revendications pour les Etats Contractants : AT, BE, CH, BE, DE, FR, GB, IT, LI, NL**

1. Esters d'acides méthyl-3,3-dialcoxy-1-propylphosphiniques de formule I ci-dessous, et les 3-oxo-composés correspondants de formule II

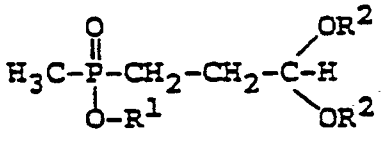 (I) 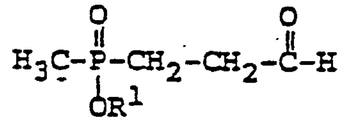 (II)

formules dans lesquelles

- $R^1$ désigne un radical pris parmi les groupes sec-butyle, n-pentyle, 2-méthyl-butyle et 3-méthyl-butyle ou un radical hydrocarboné non aromatique saturé en $C_6$-$C_{10}$ et
- $R^2$ représente des radicaux hydrocarbonés non aromatiques saturés identiques ou différents en $C_1$-$C_8$, qui peuvent être également liés à un alkylène en $C_2$-$C_4$.

2. Composés selon la revendication 1, caractérisés en ce que $R^1$ et/ou $R^2$ sont des alkyles.

3. Composés selon la revendication 1 ou 2, caractérisés en ce que le radical $R^1$ a 6 atomes de carbone.

4. Composés selon une ou plusieurs des revendications 1 à 3, caractérisés en ce que chacun des radicaux $R^2$ ou bien, si les deux sont liés à un alkylène, les deux ont ensemble au maximum 4 atomes de carbone, de préférence au maximum 3.

5. Composés de formule II selon une ou plusieurs des revendications 1 à 3, caractérisés en ce que le radical $R^1$ est un alkyle à 6 atomes de carbone.

6. Composés de formules I et II selon la revendication 1, caractérisés en ce que le radical $R^1$ est le radical n-butyle ou isobutyle et $R^2$, dans le cas de composés de formule I, le radical éthyle.

7. Composé de formule I selon la revendication 1, dont $R^1$ est le radical isobutyle et $R^2$ le radical méthyle.

8. Procédé de préparation d'esters d'acides méthyl-3,3-dialcoxy-1-propyl-phosphiniques de formule I ci-dessous et des 3-oxo-composés correspondants de formule II

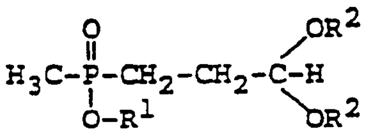 (I) 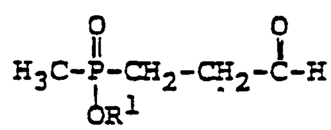 (II)

formules dans lesquelles

- $R^1$ désigne un radical hydrocarboné non aromatique saturé en $C_4$-$C_{10}$ et
- $R^2$ des radicaux hydrocarbonés non aromatiques saturés identiques ou différents en $C_1$-$C_8$, qui peuvent être également liés à un alkylène en $C_2$-$C_4$,

procédé caractérisé en ce que l'on ajoute progressivement à un méthane-phosphonite de formule $H_3C$-HPO-$OR^1$ (III), sous l'action d'agents formant des radicaux libres et à une température supérieure à la température de départ de la réaction, un acroléinacétal de formule $H_2C=CH-CH(OR^2)_2$ (IV), en une opération discontinue, ou bien en ce que, en opérant en continu, on fait réagir dans une zone de réaction des proportions équimolaires des deux composés III et IV dans les conditions indiquées avec contrôle et réglage de la température, puis on isole les composés de formule I formés ou on scinde leurs liaisons acétaliques de la manière habituelle.

9. Procédé selon la revendication 8, caractérisé en ce que l'on effectue la réaction à des températures de 70 à 170 °C, de préférence de 75 à 130 °C.

10. Procédé selon la revendication 8 ou 9, caractérisé en ce que l'on opère avec un composé formant des radicaux libres dans une proportion de 0,1 à 5 mol-%, de préférence de 0,5 à 3 mol-% et en particulier de 0,5 à 1,5 mol-%.

11. Procédé selon une ou plusieurs des revendications 8 à 10, caractérisé en ce que l'on forme les radicaux sous l'action d'un rayonnement approprié.

12. Procédé selon une ou plusieurs des revendications 8 à 11, caractérisé en ce que l'on effectue la réaction sous une atmosphère de gaz protecteurs et avec un vif mélange.

13. Procédé selon une ou plusieurs des revendications 8 à 12, caractérisé en ce que l'on utilise des composés (III) dont le radical $R^1$ est un alkyle ayant de 4 à 6 atomes de carbone.

14. Procédé selon une ou plusieurs des revendications 8 à 13, caractérisé en ce que l'on utilise des composés (IV) dont chacun des radicaux $R^2$ ou bien, si les deux sont liés à un alkylène, les deux ont ensemble au maximum 4 atomes de carbone, de préférence au maximum 3.

15. L'emploi des esters phosphiniques de formule I ou des 3-oxo-composés de formule II selon une ou plusieurs des revendications 1 à 5 pour la préparation de dérivés de phosphinothricine.

**Revendications pour l'Etat Contractant : ES**

1. Procédé de préparation d'esters d'acides méthyl-3,3-dialcoxy-1-propyl-phosphiniques de formule I ci-dessous et des 3-oxo-composés correspondants de formule II

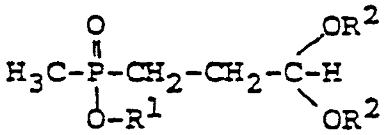 (I) 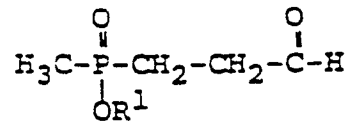 (II)

formules dans lesquelles

$R^1$ désigne un radical hydrocarboné non aromatique saturé en $C_4$-$C_{10}$ et

$R^2$ des radicaux hydrocarbonés non aromatiques saturés identiques ou différents en $C_1$-$C_8$, qui peuvent être également liés à un alkylène en $C_2$-$C_4$,

procédé caractérisé en ce que l'on ajoute progressivement à un méthane-phosphonite de formule $H_3C$-HPO-$OR^1$ (III), sous l'action d'agents formant des radicaux libres et à une température supérieure à la température de départ de la réaction, un acroléinacétal de formule $H_2C=CH-CH(OR^2)_2$ (IV), en une opération discontinue, ou bien en ce que, en opérant en continu, on fait réagir dans une zone de réaction des proportions équimolaires des deux composés III et IV dans les conditions indiquées avec contrôle et réglage de la température, puis on isole les composés de formule I formés ou on scinde leurs liaisons acétaliques de la manière habituelle.

2. Procédé selon la revendication 1, caractérisé en ce que l'on effectue la réaction à des températures de 70 à 170°C, de préférence de 75 à 130°C.

3. Procédé selon la revendication 1 ou 2, caractérisé en ce que l'on opère avec un composé formant des radicaux libres dans une proportion de 0,1 à 5 mol-%, de préférence de 0,5 à 3 mol-% et en particulier de 0,5 à 1,5 mol-%.

4. Procédé selon une ou plusieurs des revendications 1 à 3, caractérisé en ce que l'on forme les radicaux sous l'action d'un rayonnement approprié.

5. Procédé selon une ou plusieurs des revendications 1 à 4, caractérisé en ce que l'on effectue la réaction sous une atmosphère de gaz protecteurs et avec un vif mélange.

6. Procédé selon une ou plusieurs des revendications 1 à 5, caractérisé en ce que l'on utilise des composés (III) dont le radical $R^1$ est un alkyle ayant de 4 à 6 atomes de carbone.

7. Procédé selon une ou plusieurs des revendications 1 à 6, caractérisé en ce que l'on utilise des composés (IV) dont chacun des radicaux $R^2$ ou bien, si les deux sont liés à un alkylène, les deux ont ensemble au maximum 4 atomes de carbone, de préférence au maximum 3.

8. L'emploi pour la préparation de dérivés de phosphinothricine d'esters phosphiniques ou de 3-oxo-composés de formules respectives I et II de la revendication 1, dans lesquels $R^1$ est un radical pris parmi les groupes sec-butyle, n-pentyle, 2-méthyl-butyle et 3-méthyl-butyle ou un radical hydrocarboné non aromatique saturé ayant de 6 à 10 atomes de carbone et $R^2$ a la signification indiquée à la revendication 1.